# EUROPEAN PATENT SPECIFICATION

(11) **EP 1 592 631 B1**
(45) Date of publication and mention of the grant of the patent: **29.08.2007**
(21) Application number: 04709059.2
(22) Date of filing: 06.02.2004
(51) Int. Cl.: B65G 47/84, B07C 5/36

(54) **SLAT SORTATION CONVEYOR**
LATTEN-SORTIERFÖRDERER
TRANSPORTEUR TRIEUR A BANDES

(30) Priority: 07.02.2003 US 445974 P
(43) Date of publication of application: 09.11.2005
(73) Proprietor: Intelligrated, Inc., Mason, OH 45040-9498 (US)
(72) Inventor: HEIT, Martin, Albert, Mason, OH 45040-9498 (US); ZIMMER, Justin, Mason, OH 45040-9498 (US)
(74) Representative: Boulinguiez, Didier
(86) International application number: PCT/US2004/003554
(87) International publication number: WO 2004/092042

(56) References cited:
- EP-A- 0 792 824
- US-A- 5 127 510
- US-A- 5 595 279

## Description

### Background of the Invention

This invention relates to a sortation conveyor with pusher shoes which travel laterally (transverse to the direction of travel of the sortation conveyor) to divert packages carried by the upper surface of the sortation conveyor to spurs, such as described in US 5,595,279, based on which the preamble of claim 1 is drafted.
In such conveyors, articles being conveyed might extend through, or to an undesirable depth into the gap between the pair of slats.
To mitigate those drawbacks, the invention relates to a conveyor which, further to the aforementioned features, includes the features of the characterizing part of claim 1. The invention relates more particularly to a slat type sortation system in which each pusher shoe is supported and guided by a respective pair of slats connected together at their ends, in which the gap between the slats of each respective pair includes an longitudinally (in the direction of travel of the sortation conveyor) offset portion. The offset portion eliminates, or reduces the width of, a vertical (perpendicular to the horizontal, upper conveying surface defined by the conveyor's slats) gap extending from the upper surface to the lower surface of the slat pair. Each pusher shoe comprises a pusher cap which is attached to a pusher base assembly. The pusher base assembly includes a pusher base which is shaped complementarily to the gap and the gap's offset portion.

### Brief Description of the Drawing

The accompanying drawings incorporated in and forming a part of the specification illustrate several aspects of the present invention, and together with the description serve to explain the principles of the invention. In the drawings:

Fig. 1 is a fragmentary perspective view of a sortation conveyor and pusher shoes constructed in accordance with the present invention.

Fig. 2 is a side view of the sortation conveyor and pusher shoes of Fig. 1 taken along arrow 2-2 of Fig. 1, with the closest end caps removed.

Fig. 3 is a side view of a slat pair and a pusher shoe of Fig. 2.

Fig. 4 is a fragmentary side view of adjacent pairs of slats and pusher shoes of Fig. 2.

Fig. 5 is fragmentary plan view of the sortation conveyor and pusher shoes of Fig. 1.

Fig. 6 is an end view of two slat pairs.

Fig. 7 is a cross-sectional side view of a pusher shoe taken through the middle of the bearing and pin.

Fig. 8 is a cross-sectional side view of a pusher base taken through the middle along its short dimension.

Fig. 9 is a cross-sectional side view of a pusher base taken through the middle along its long dimension.

Fig. 10 is an enlarged perspective view of an insert.

Fig. 11 is an enlarged perspective view of a pin.

Fig. 12 is a bottom view of the pusher cap.

Fig. 13 is a bottom perspective view of the pusher base.

Fig. 14 is a bottom perspective view of the pusher base, from a different angle that Fig. 13.

Fig. 15 is a top perspective view of the pusher base.

Fig. 16 is a top perspective view of the pusher base, from a different angle than Fig. 15.

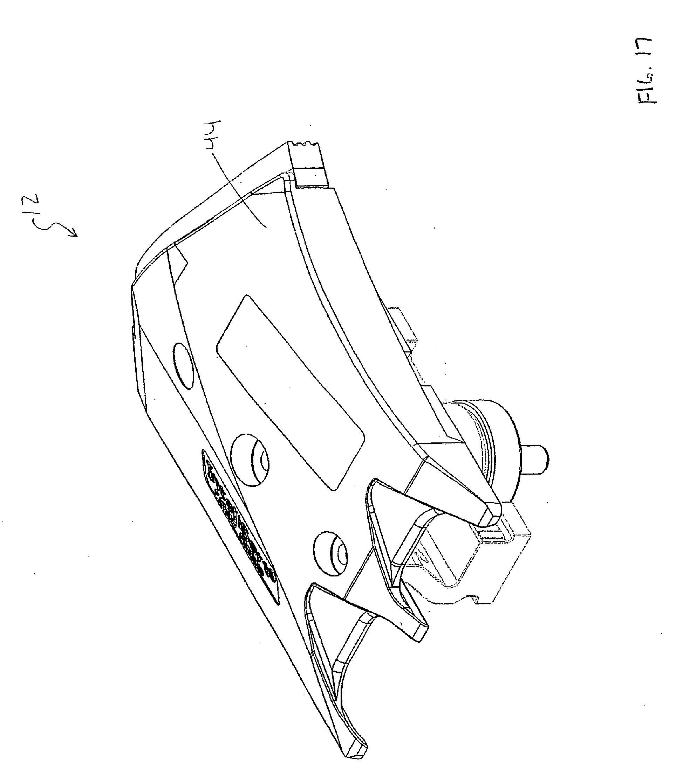

Fig. 17 is a top perspective view of the pusher shoe, from an angle similar to Fig. 15.

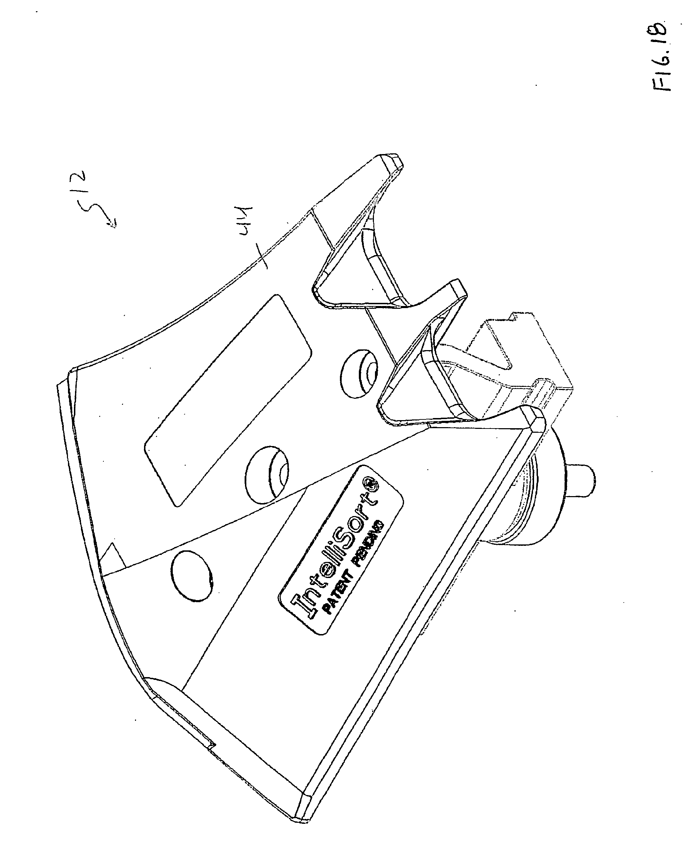

Fig. 18 is a top perspective view of the pusher shoe, from an angle similar to Fig. 16.

Fig. 19 is a bottom perspective view of the pusher shoe.

Fig. 20 is a bottom perspective view of the pusher shoe, from a different angle than Fig. 19.

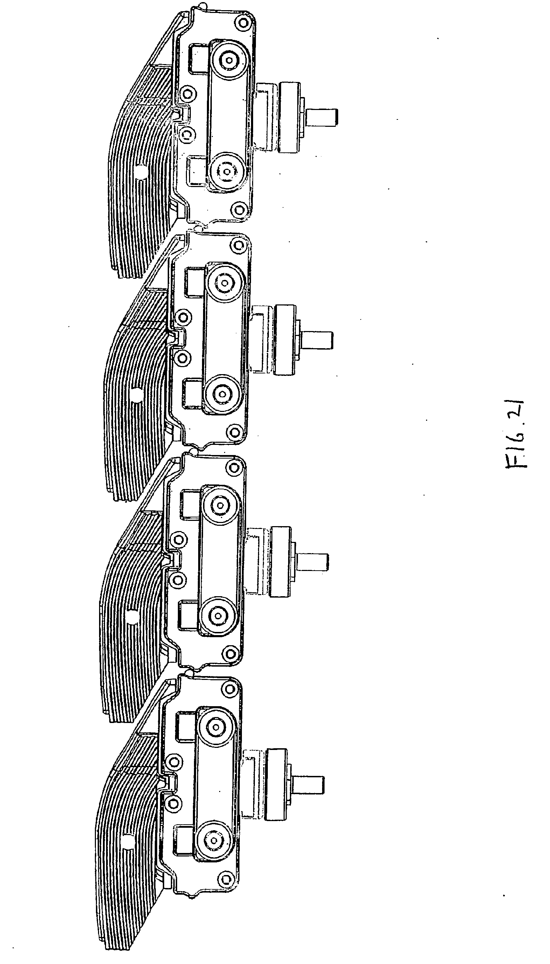

Fig. 21 is a side view of the opposite side of the sortation conveyor and pusher shoes of Fig. 1.

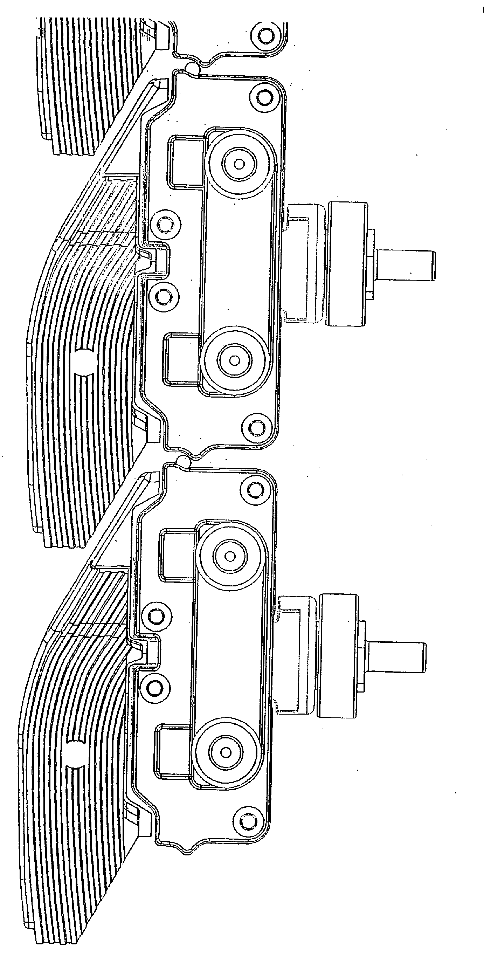

Fig. 22 is a side view of a slat pair and a pusher shoe of Fig. 21.

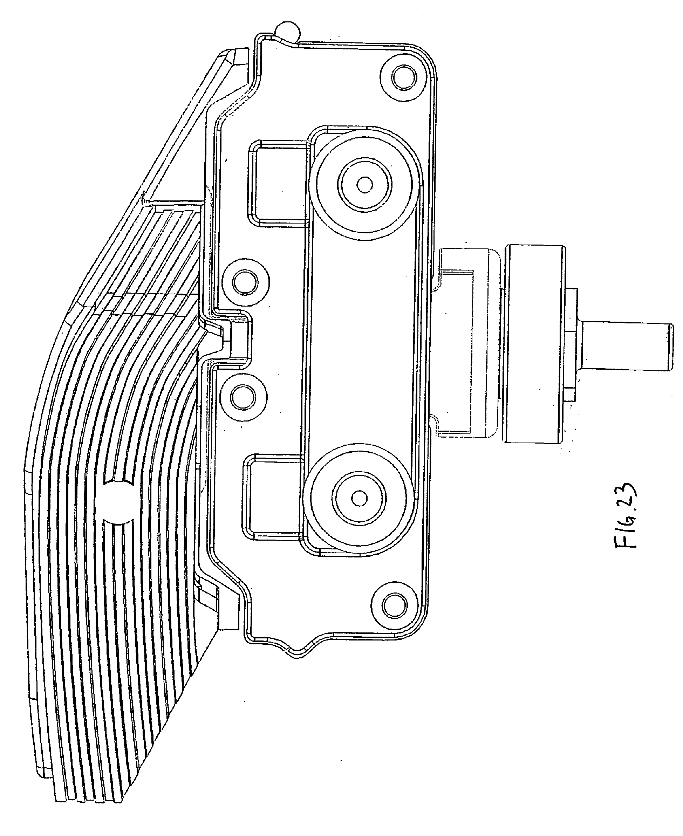

Fig. 23 is a fragmentary side view of adjacent pairs of slats and pusher shoes of Fig. 21.

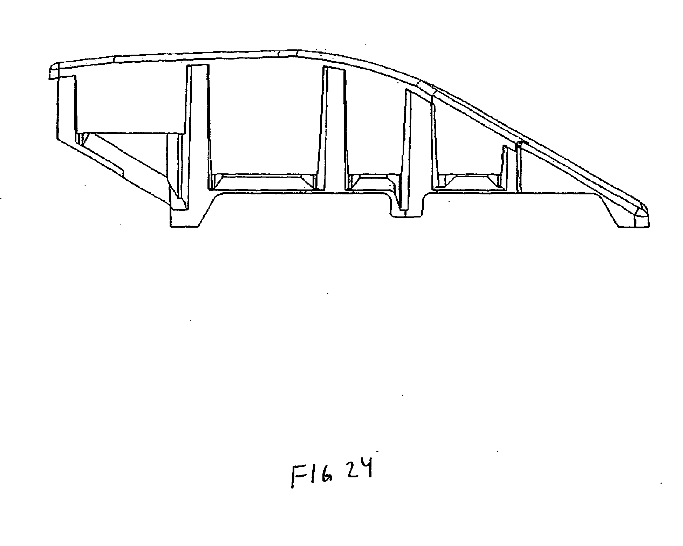

Fig. 24 is a side view of a pusher cap.

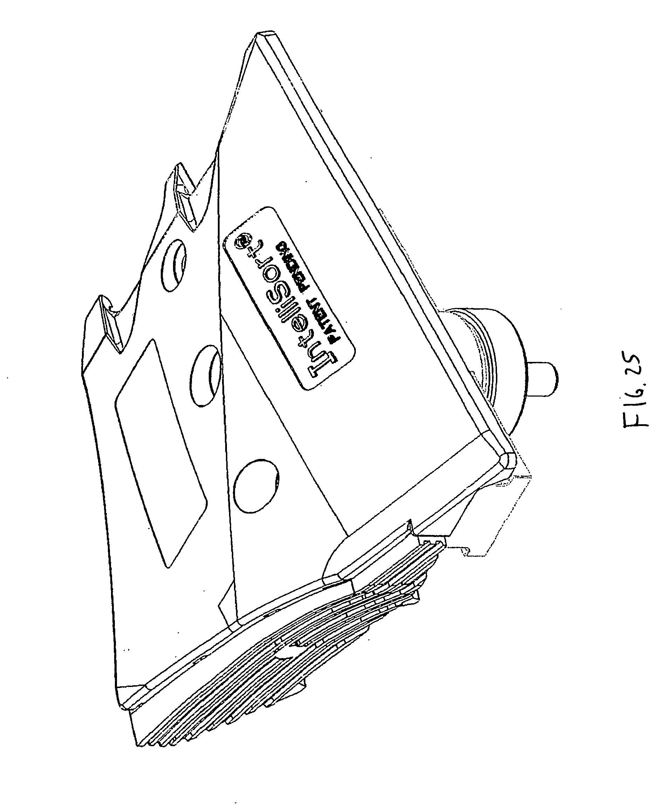

Fig. 25 is a top perspective view of the pusher shoe.

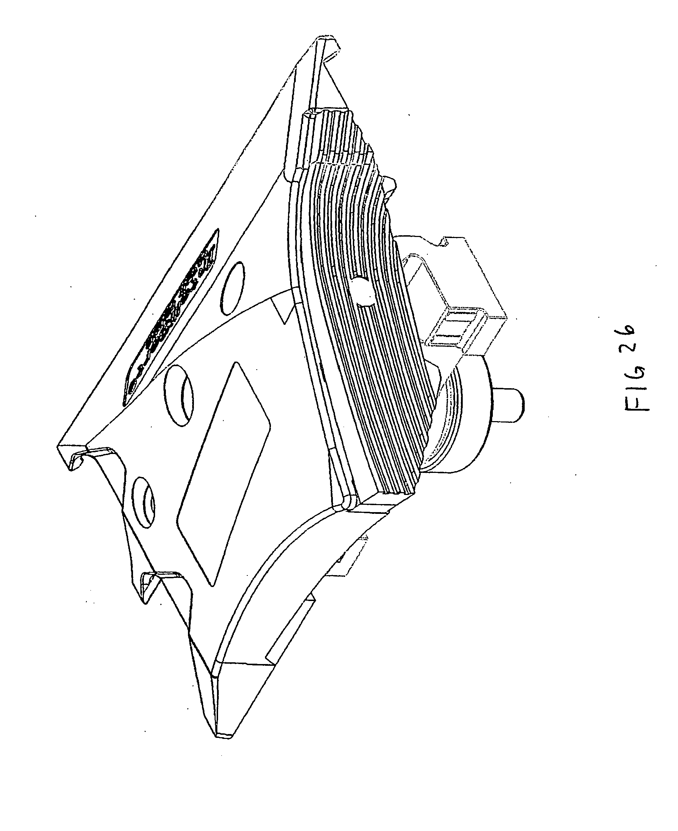

Fig. 26 is a top perspective view of the pusher shoe, from a different angle than Fig. 25.

Fig. 27 is a perspective view of an end cap.

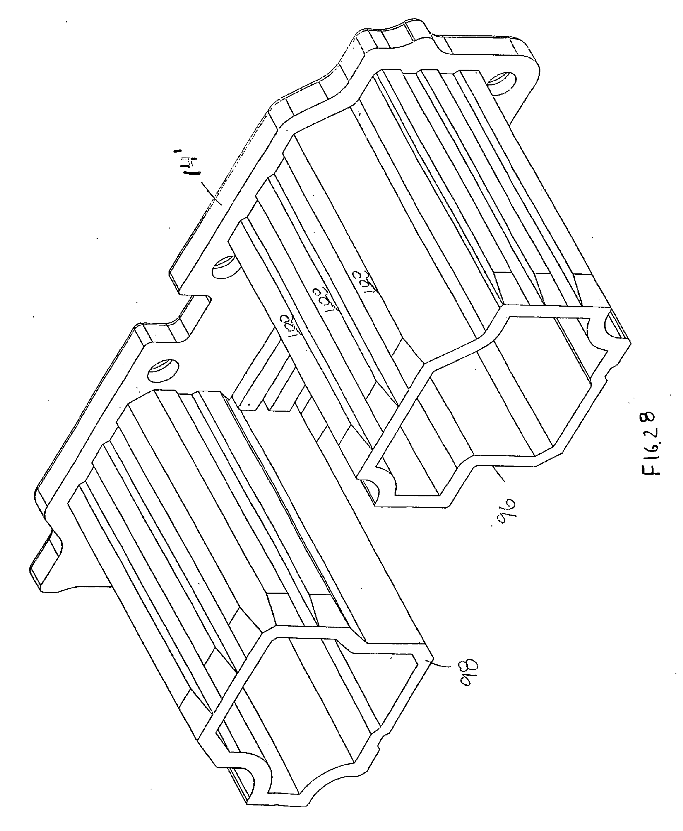

Fig. 28 is a perspective view of the end cap of Fig. 27, from another angle.

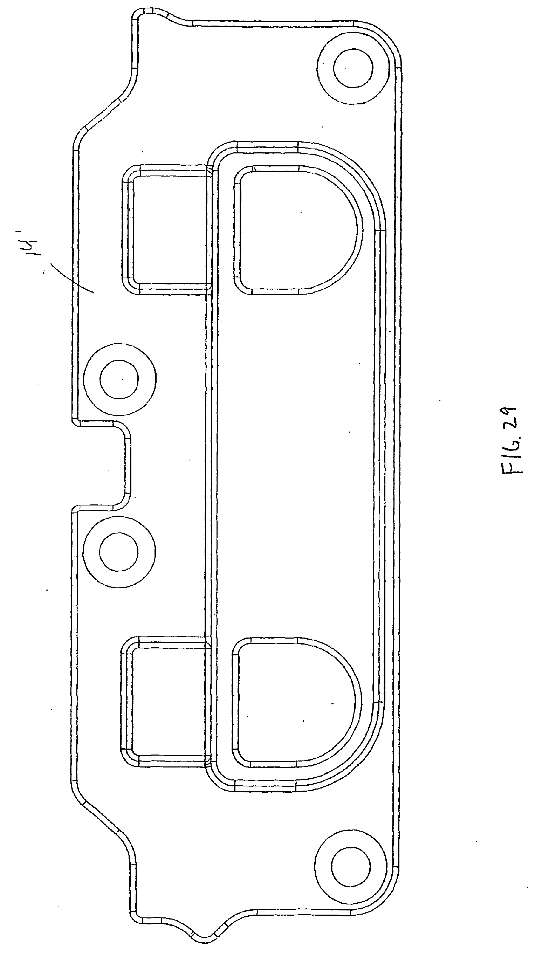

Fig. 29 is a front view of the end cap of Fig. 27.

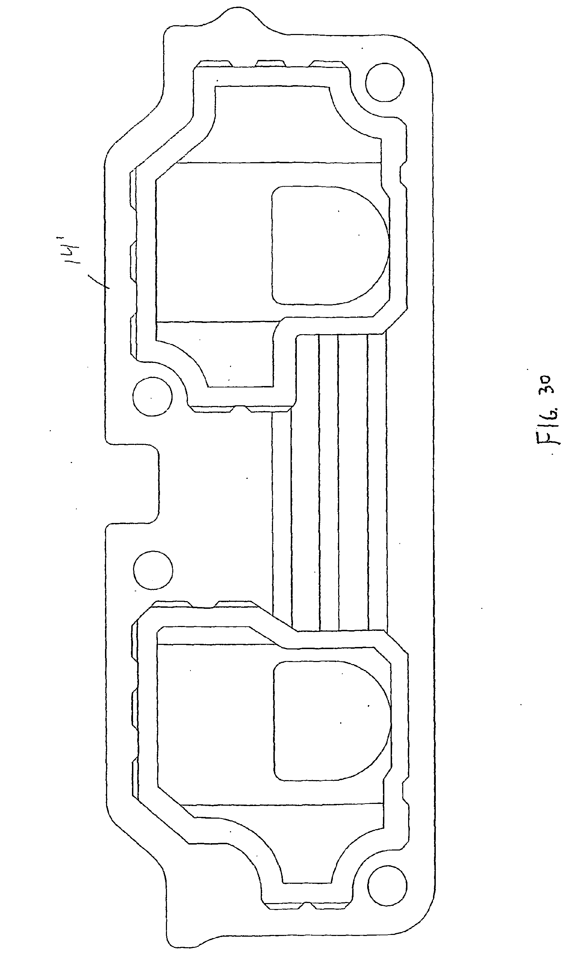

Fig. 30 is a rear view of the end cap of Fig. 27.

Fig. 31 is a cross-sectional perspective view of the end cap of Fig. 27, taken along the center of the insert.

Fig. 32 is a cross-sectional side view of the end cap of Fig. 27, taken along the center of the insert.

Figs. 33-36 are views of an end cap for a round tube sortation conveyor, which is not usable with slats constructed according to the present invention.

Reference will now be made in detail to the present preferred embodiment of the invention, an example of which is illustrated in the accompanying drawings.

### Detailed Description Of An Embodiment Of The Invention

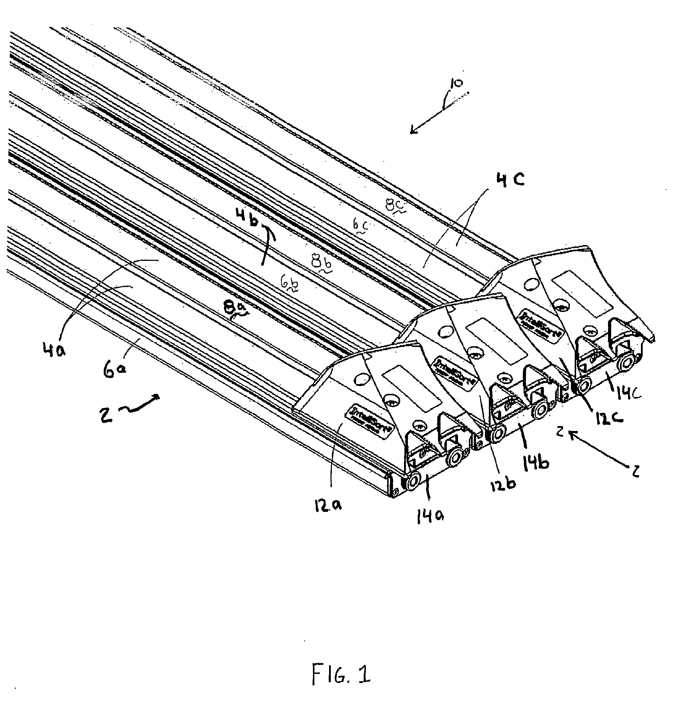

Referring now to the drawings in detail, wherein like numerals indicate the same elements throughout the views, Fig. 1 a fragmentary perspective view of a sortation conveyor and pusher shoes constructed in accordance with the present invention. Sortation conveyor, indicated generally at 2, includes a plurality of pairs of slats 4, identified as 4a, 4b and 4c, disposed generally parallel to each other, transverse to the direction of travel (indicated by arrow 10) of sortation conveyor 2. Each slat pair includes respective spaced apart leading slat 6 and trailing slat S, identified as 6a & 8a, 6b & 8b, and 6c & 8c. Carried by each slat pair 4 is a respective pusher shoe 12, identified as 12a, 12b and 12c. Each respective pair of leading slat 6 and trailing slat 8 are maintained together as a slat pair 4 by a respective pair of end caps 14 disposed at opposite ends of slats 6 and 8, identified as 14a, 14b and 14c in Fig. 1 (the opposite side is not shown). Each end cap engages and is driven by two spaced apart pins (not shown) extending from the drive chain.

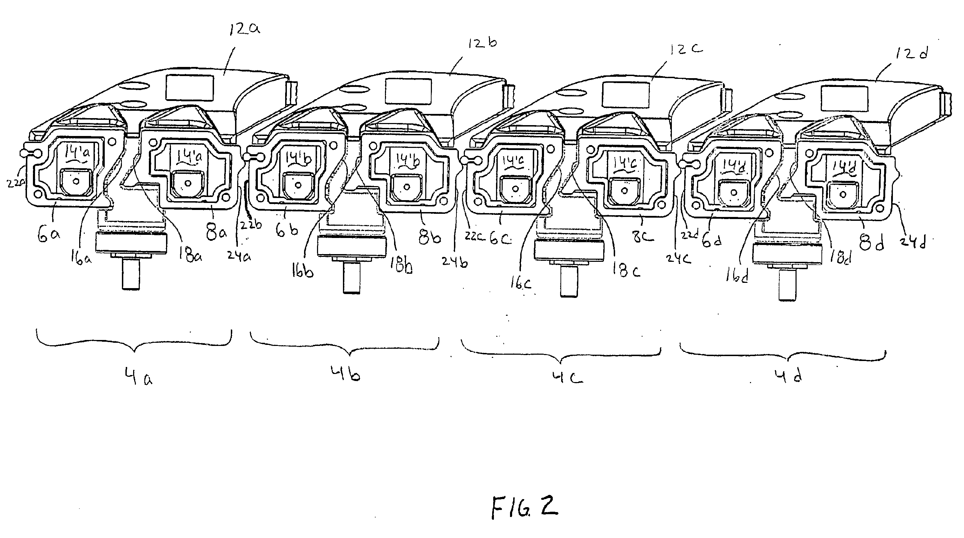

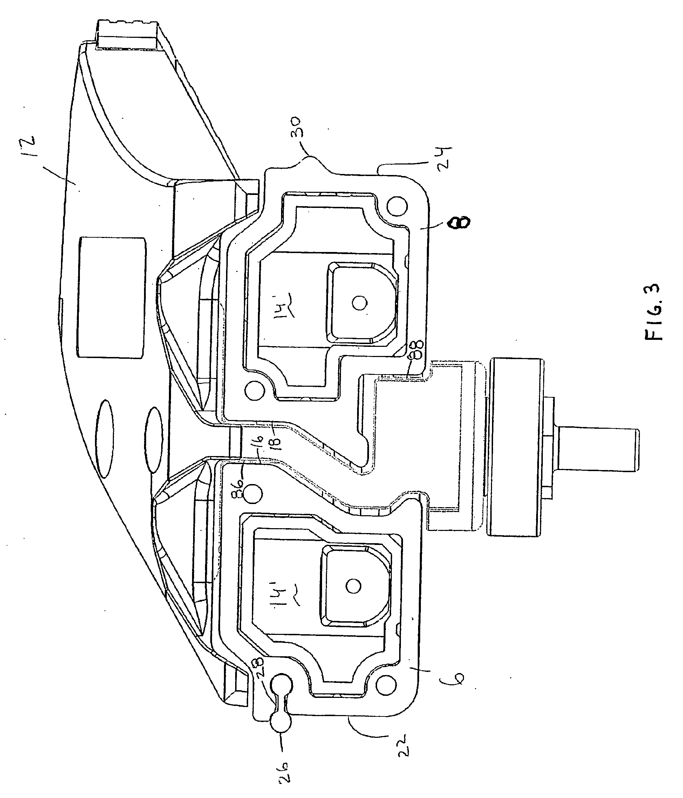

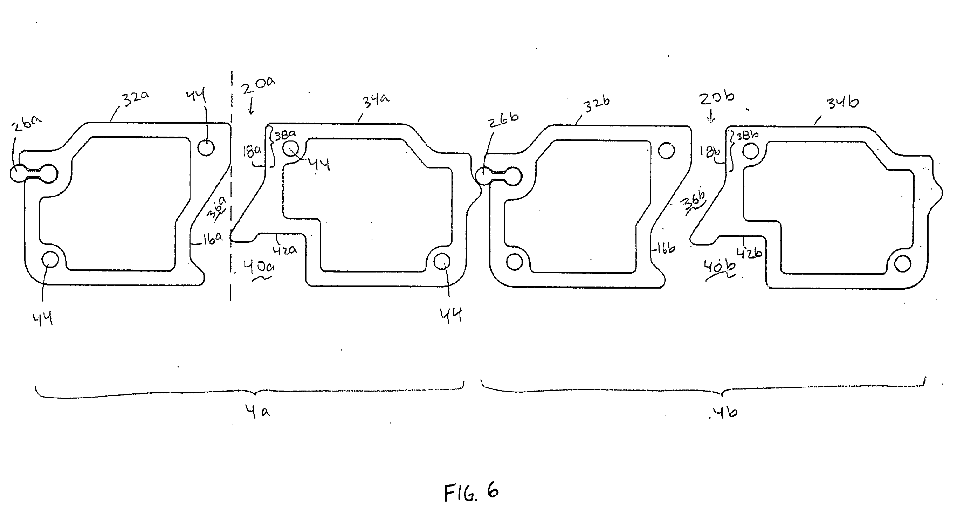

In Figs. 2 and 3, which are side views of the sortation conveyor and pusher shoes of Fig. 1 taken along arrow 2-2 of Fig. 1, the closest end caps have been omitted, revealing the shape of each slat pair's opposing surfaces or edges 16 and 18 of leading slat 6 and trailing slat 8, respectively, which cooperate to form gap 20 (numbered in Fig. 6). End caps 14' at the opposite side of the sortation conveyor are seen through the hollow interior of slats 6 and 8. Leading surfaces or edges 22 of leading slat 6 of the trailing slat pair are maintained in a spaced apart relationship from respective trailing surfaces or edges 24 of trailing slat 8 of the leading slat pair 4. For example, leading surface 22b of trailing slat pair 4b is spaced apart from trailing surface 24a of leading slat pair 4a.

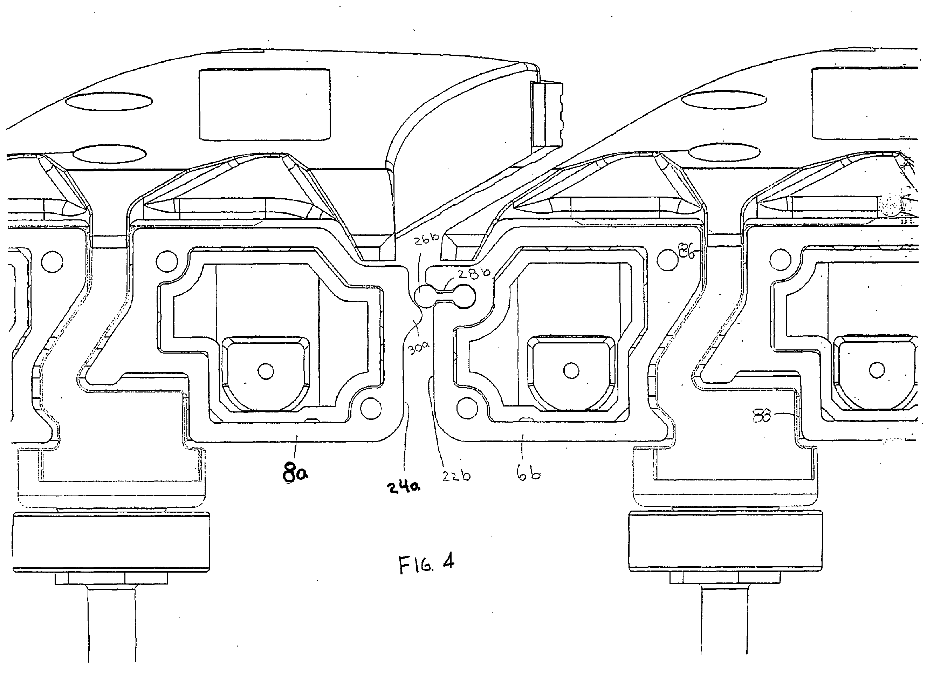

As seen enlarged in Fig. 4, leading surface 22 preferably includes seal 26 which engages trailing surface 24 of the leading slat pair while the adjacent slat pairs travel along the upper, conveying surface of sortation conveyor 2. Seal 26 may be made of any suitable material, such as extruded from polyurethane. Seal 26 is disposed in groove 28 which extends the length of leading slat 6. Preferably trailing surface 24 includes seal engaging portion 30, shown as a rib, which extends the length of trailing slat 8. Seal 26, groove 28 and rib 30 are located and dimensioned such that there is the desired contact between seal 26 and trailing surface 24, without presenting any interference throughout the path of slat pairs 4. While the slat pairs 4 are traveling through the catenary of the return run downstream of the idler gear at the end of the upper run, seal 26 preferably engages trailing surface 24.

Seal 26 may have any suitable configuration for engaging trailing surface 24 and for being held to leading surface 22. The retention portion of seal 26 may be any suitable configuration. For example, either or both of the bulbous portions of seal 26 may be hollow. The bulbous seal portion may instead be flat. The Groove 28 may be omitted and seal 26 secured to leading surface 22 by any suitable means, such as by adhesive. Seal 26 may be carried by trailing surface 24, with the locations seal retention configuration 28 (depicted as a groove) and seal engaging portion 30 as appropriate.

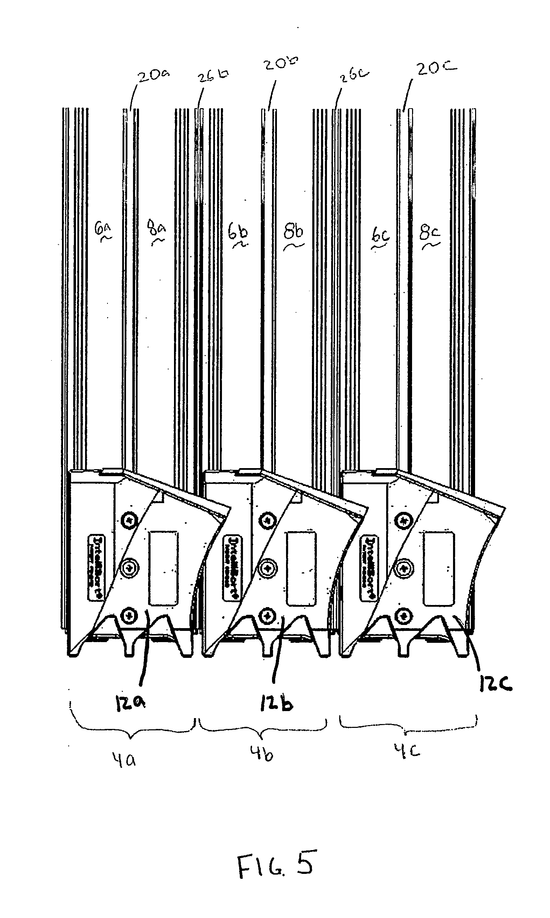

Fig. 5 is a fragmentary plan view of the sortation conveyor and pusher shoes of Fig. 1, showing gaps 20 (20a, 20b and 20c) within each slat pair 4 (4a, 4b and 4c) between the respective leading slat 6 (6a, 6b and 6c) and trailing slat 8 (8a, 8b, and 8c). When viewed perpendicular to and from above the conveying surface, preferably there is no line of sight through gaps 20, although within the scope of this invention, a minimal line of sight gap may exist, such gap being small enough to prevent parts of most items being conveyed from extending therethrough, completely or to an undesirable depth.

Referring to Fig. 6, there is shown an end view of two adjacent slat pairs 4a and 4b, with the end caps omitted. Each leading slat 6a and 6b, and each trailing slat 8a and 8b include respective upper surfaces 32 and 34 which when on the upper run of sortation conveyor 2 define the conveying surface in cooperation with all other slat pairs on the upper run of sortation conveyor 2. Upper surfaces 32 and 34 are preferably flat as illustrated, although any other suitable shape may be used.

Referring to slat pair 4a, which is exemplary of all slat pairs, gap 20a is defined by opposing surfaces 16a and 18b as a result of the spaced apart relationship between leading slat 6a and trailing slat 8a. As illustrated, gap 20a includes offset portion 36a, which offsets the gap along its length from the upper surface (32a and 34a) of slat pair 4a. Offset portion 36a has an angle of approximately 33°, and provides strength to pusher base 48. As can be seen, a vertical line (dash line) through the intersection of trailing surface 16a and upper surface 32a (as illustrated the rearmost portion of trailing surface 16a) extends at least tangent to leading surface 18a. Leading surface 18a may extend forward past this location, or if extending short of this location, the distance being small enough to prevent parts of most items being conveyed from extending therethrough, completely or to an undesirable depth.

Offset portion 36a may be any suitable shape, such as including arcuate, and may start at upper surfaces 32a and 34a, without a vertical portion 38a. Offset portion 36a may be in any suitable direction, whether forward or backward. Gap 20a includes lower portion 40a which receives a complementarily shaped portion of the pusher base. Portion 40a includes recess 42a, which is included to reduce the wall thickness for molding purposes.

Slats 16a and 18a include a plurality of holes 44 at each end for receiving screws which hold end caps 14 and 14' to the slats.

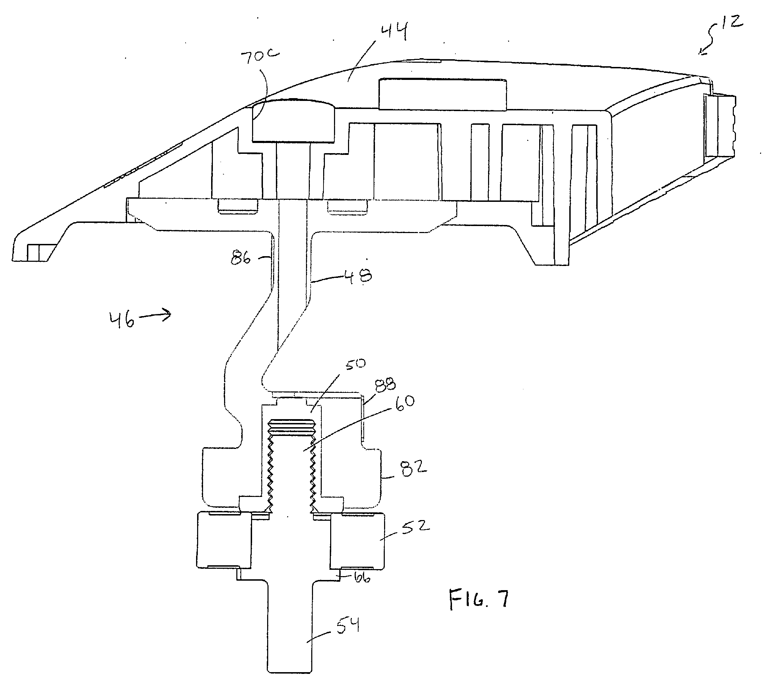

Referring to Fig. 7, which is a cross-sectional side view of a pusher shoe taken through the middle of the bearing and pin, pusher shoe 12 comprises pusher cap 44 which is attached to pusher base assembly 46. Any suitable pusher cap 44 may be used, as long as it is shaped complementarily to the specific configuration of slat pairs 4. Pusher cap 44 may have a bumper mounting configuration common to various angles or may be a single angle, both of which are disclosed in the cited provisional applications. Pusher cap 44 may be a right hand, left hand, or double sided configuration.

Pusher base assembly 46 is configured complementarily to and to cooperate with slat pairs 4 so as to allow movement transverse to the conveyor direction of travel. Pusher base assembly includes pusher base 48, insert 50, bearing 52, and pin 54.

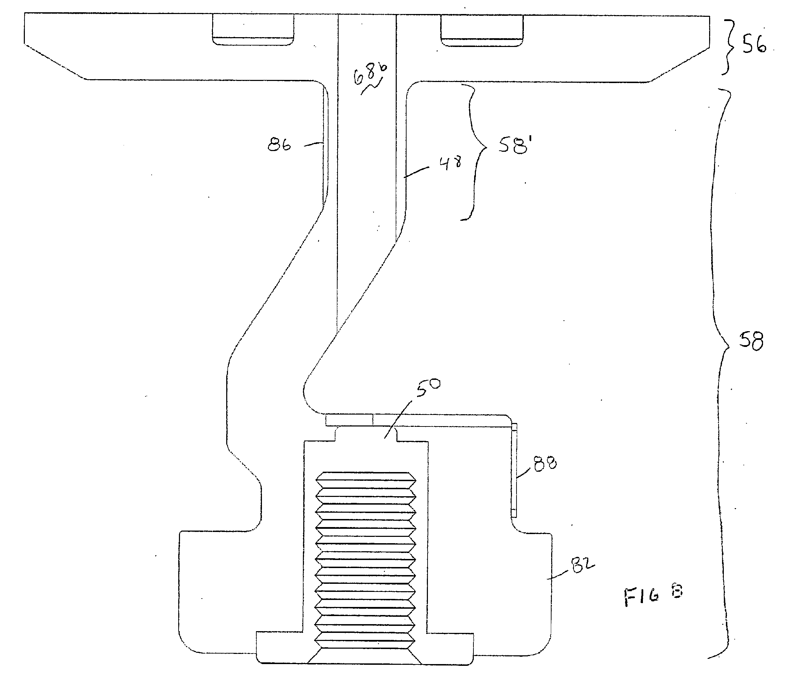

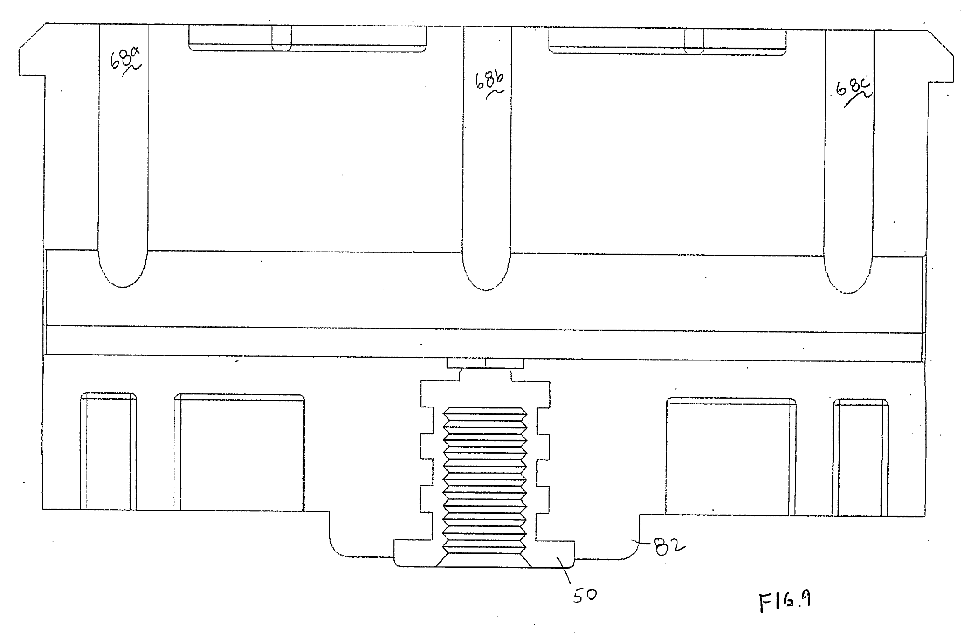

Referring also to Figs. 8, 9, 10 and 11, pusher base 48 includes upper portion 56 which is configured to have pusher cap 44 mounted thereto, and lower portion 58, which is shaped complementarily with gap 20. As illustrated, insert 50 is molded integrally with pusher base 48 and includes internal threads which retain threaded end 60 of pin 54. Insert 50 includes a plurality of rings 62, each of which has flat sides 64. Rings 62 retain insert 50 longitudinally and flat sides 64 prevent rotation, allowing pin 54 to be screwed in. Of course, any suitable configuration may be used.

Pin 54 includes hex flange 66, with the flange portion retaining bearing 52 and the hex portion providing for tightening pin 54 into insert 52. Pin 54 includes a slot in which a nylon or other suitable torque retention substance is disposed. Any suitable torque retention means maybe used, such as applying a locking substance to threads 60, omitting the slot.

Pusher base 48 includes a plurality of holes 68a, 68b and 68c, which receive threaded fasteners (not shown) disposed through holes 70a, 70b and 70c in the top of pusher cap 44. Referring to Fig. 8, lower portion 58 includes straight portion 58', which necessitates straight portion 38 of gap 20. Straight portion 58' is included in order to receive these threaded fasteners. If these threaded fasteners are omitted, such as with break away pusher caps, straight portions 38 and 58' could be omitted or reduced in length.

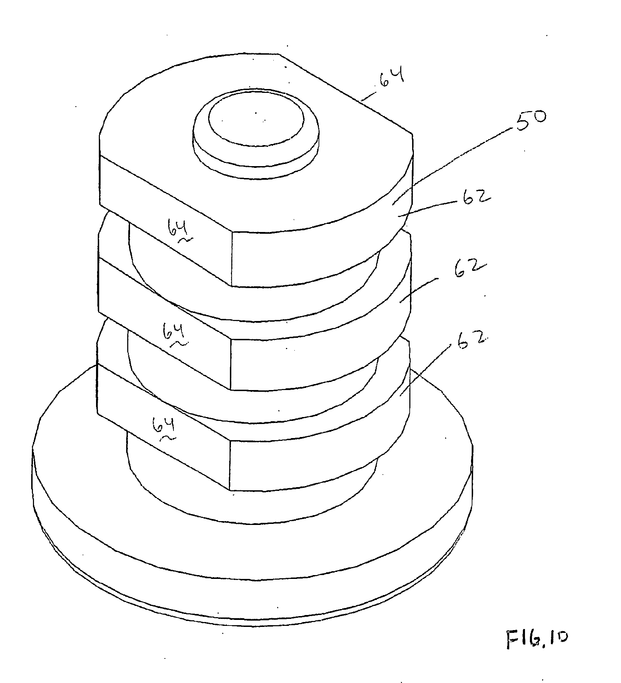

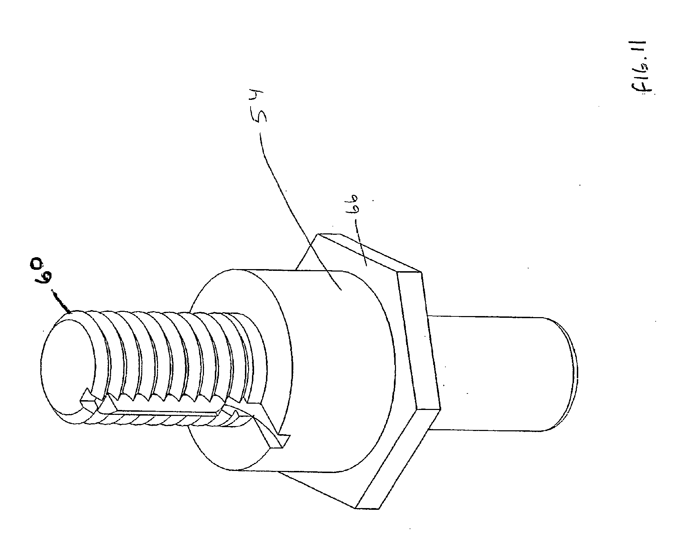

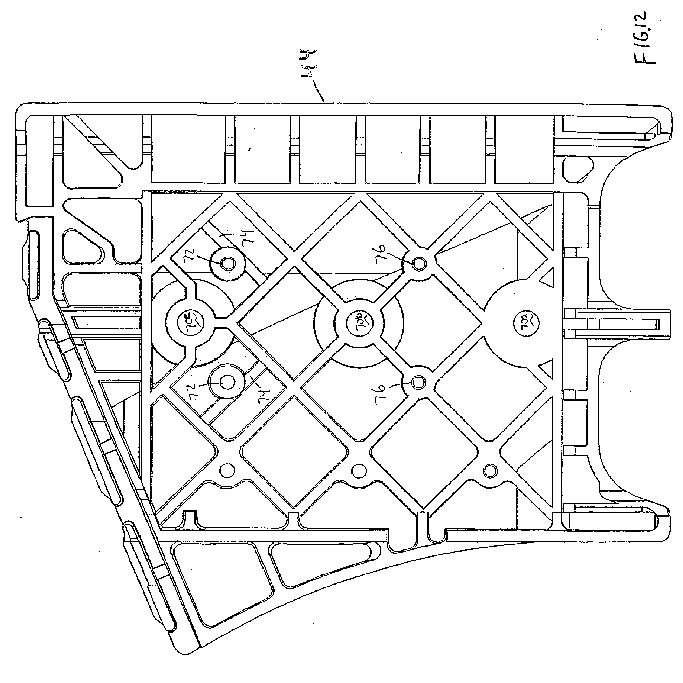

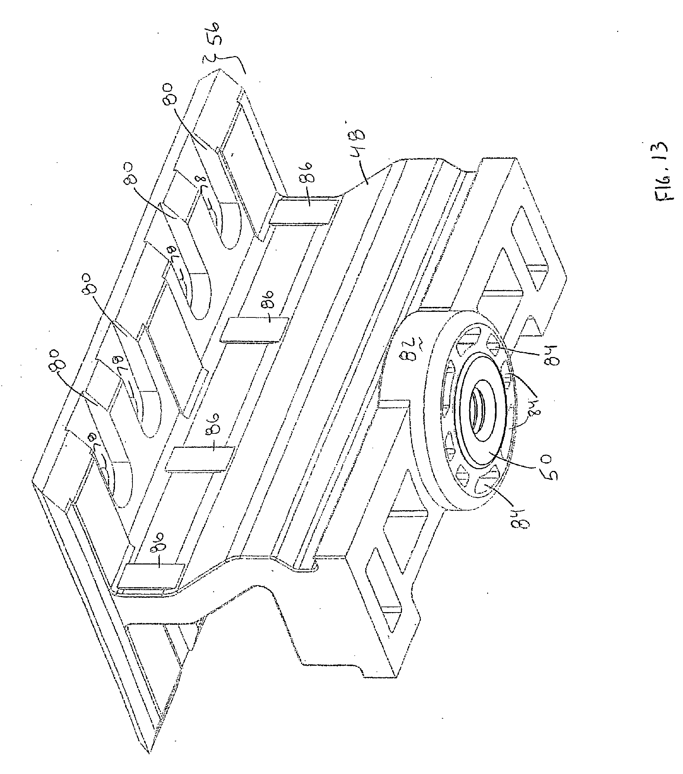

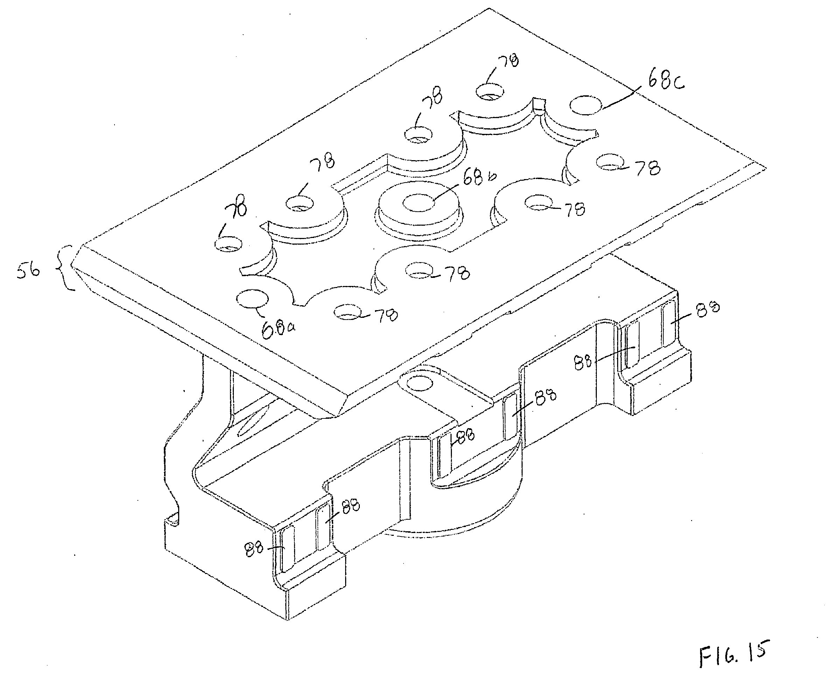

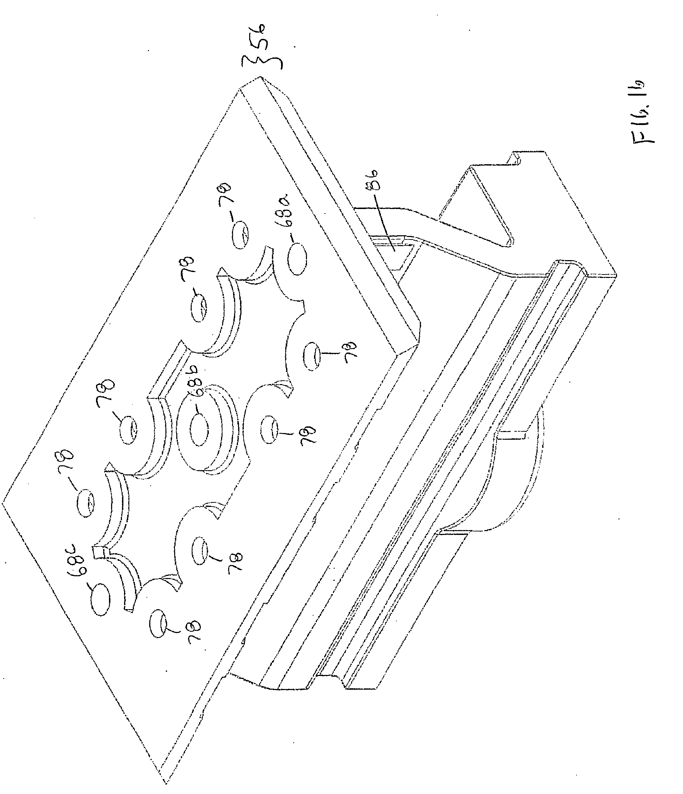

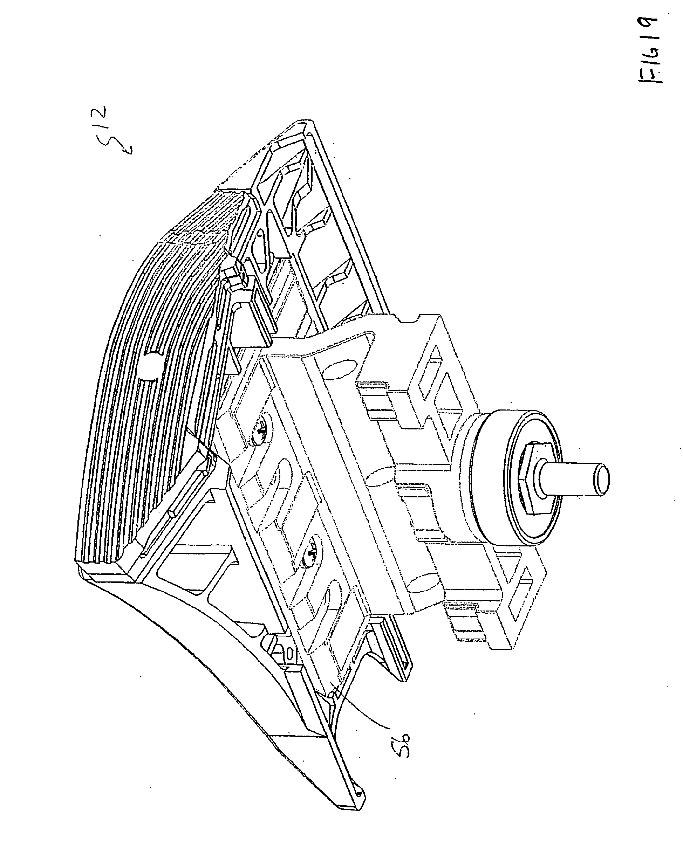

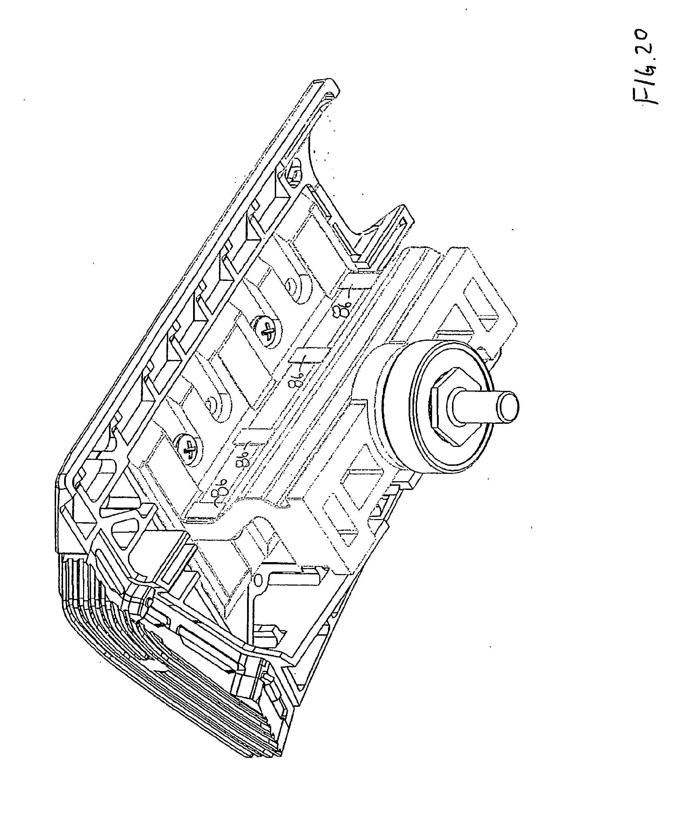

Fig. 12 is a bottom view of pusher cap 44, illustrating the pattern of a plurality of ribs. A plurality of holes 72 are formed in bosses supported by ribs 74, which extend within the otherwise generally rectangular rib pattern. A plurality of holes 76 are also provided, at intersections of the generally rectangular rib pattern. As seen in Figs. 13, 14, 15 and 16, upper portion 56 of pusher base 48 includes a plurality of holes 78, each within a respective recess 80. Holes 78 are arranged in pairs of two, with one hole 78 of each of pair aligning with holes 72 and 76 of pusher cap. Threaded fasteners are disposed through holes 78 (see Figs. 19 and 20) and threadingly engage holes 72 and 76 to secure pusher cap 44 to pusher base 48, in addition to the threaded fasteners disposed through holes 70a-c. The pairing and spacing of holes 78 allow the same pusher base to be used with any mating type of pusher cap, such as right hand or left hand. The height of pusher cap prevents holes 76 from being located closer to the bottom edge (as seen in Fig. 12). In order to maintain as great a span between holes 72 and 76, holes 72 are further off center than holes 76. This rectangular pattern of holes 72 and 76 is shifted off center in one direction for a right hand pusher cap, and to the opposite direction for a left hand pusher cap. The pairs of holes 78 accommodate both locations.

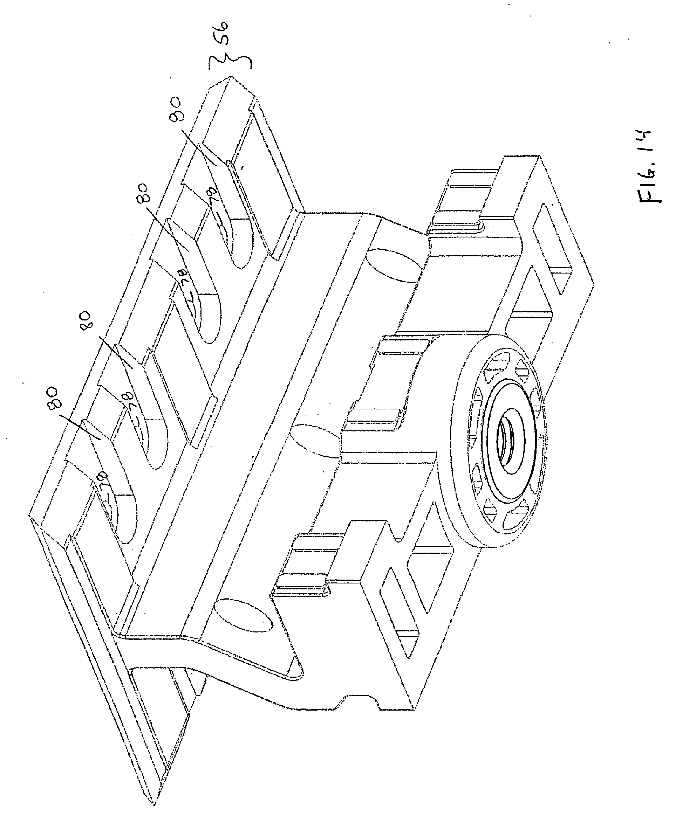

As seen in Figs. 13 and 14, lower portion 58 includes boss 82 which surrounds insert 50. A plurality of recesses 84 are formed in boss 82 about insert 50, which reduces the wall thickness to avoid or minimize distortion during molding.

Referring to Figs. 13 and 14, pusher base 48 includes a plurality of spaced apart raised bearing surfaces 86 and 88. Slats roll forward as pusher shoes 12 are diverted. Bearing surfaces 86 and 88 distribute the loading from pusher base 48 to the slats during divert. Bearing surfaces 86 and 88 may be made of the same material as pusher base 48 and pusher cap 44, Nylon ST-801, or may be an insert of suitable material. Bearing surfaces 86 and 88 may be impregnated with an additive, such as Teflon or molybdenum disulfate. Of course, the entire pusher base 48 may be impregnated with an additive such as Teflon, or made of a low friction material, to accommodate the sliding motion of the pusher bases.

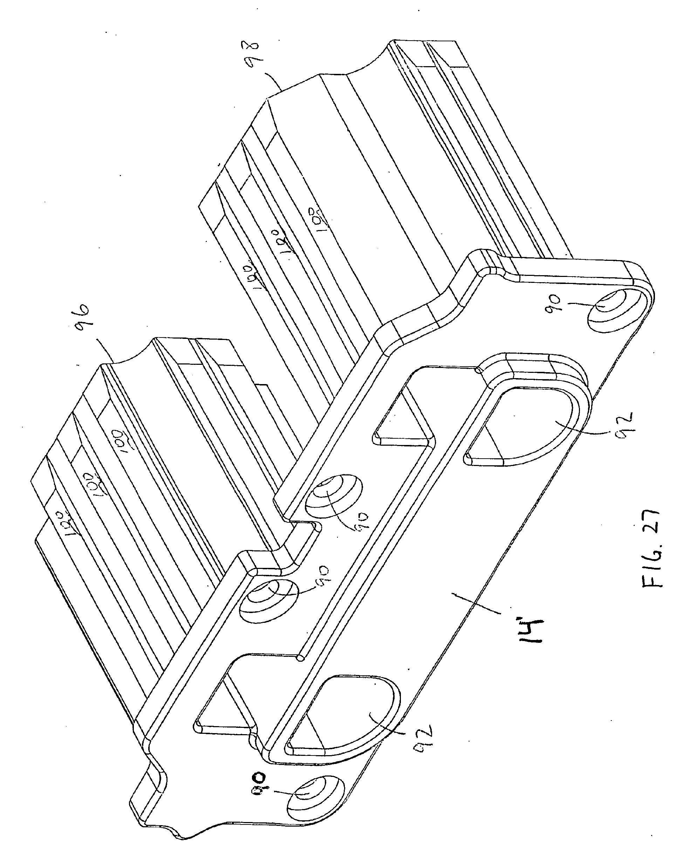

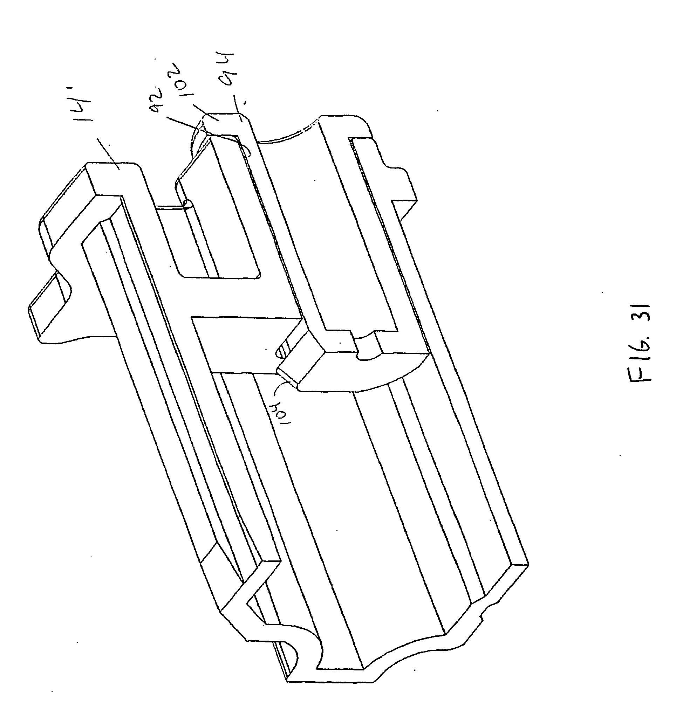

Referring to Fig. 27, end cap 14' is illustrated having holes 90 through which screws are disposed to threadingly engage holes 44 of slats 6 and 8 to form slat pairs 4. End cap 14' also openings 92 which receive bushings 94 (Fig. 31). End cap 14' includes two portions 96 and 98, each of which is shaped complementarily to the interior of the slat which receives it, with ribs 100 extending outwardly from portions 96 and 98 to engage the slats interior. As will be readily apparent, end caps 14 and 14' are mirror images of each other, since leading slat 6 is different from trailing slat 8.

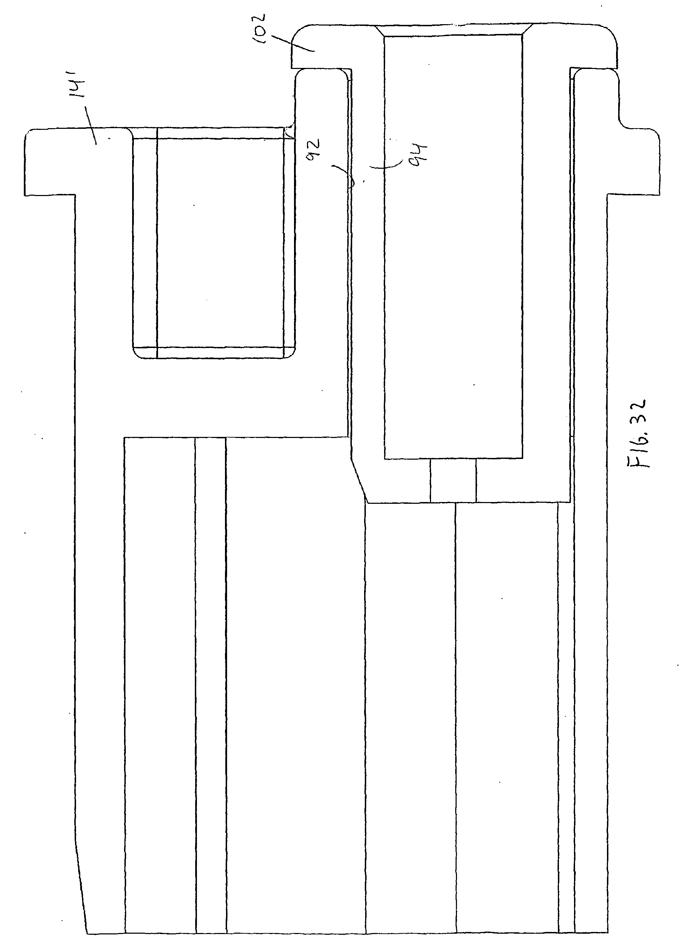

Referring to Figs. 31 and 32, bushing 94 is retained in opening 92 at the front by flange 102 and at the rear by flange 104.

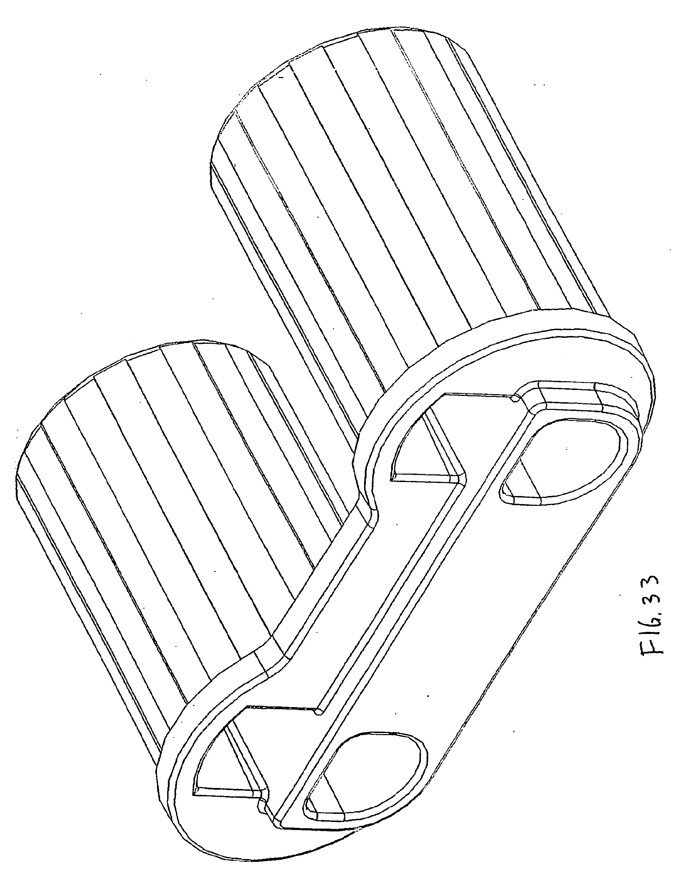

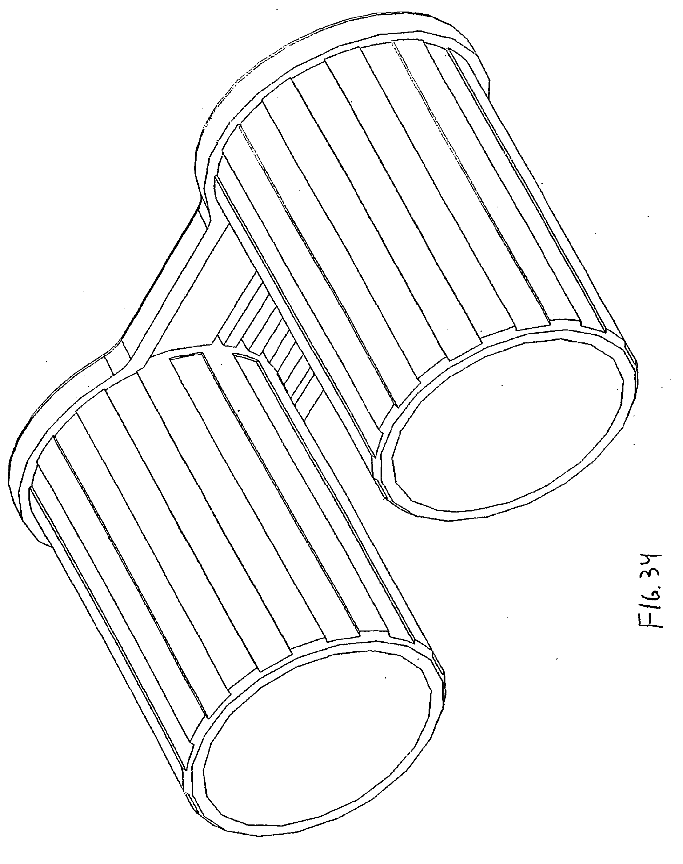

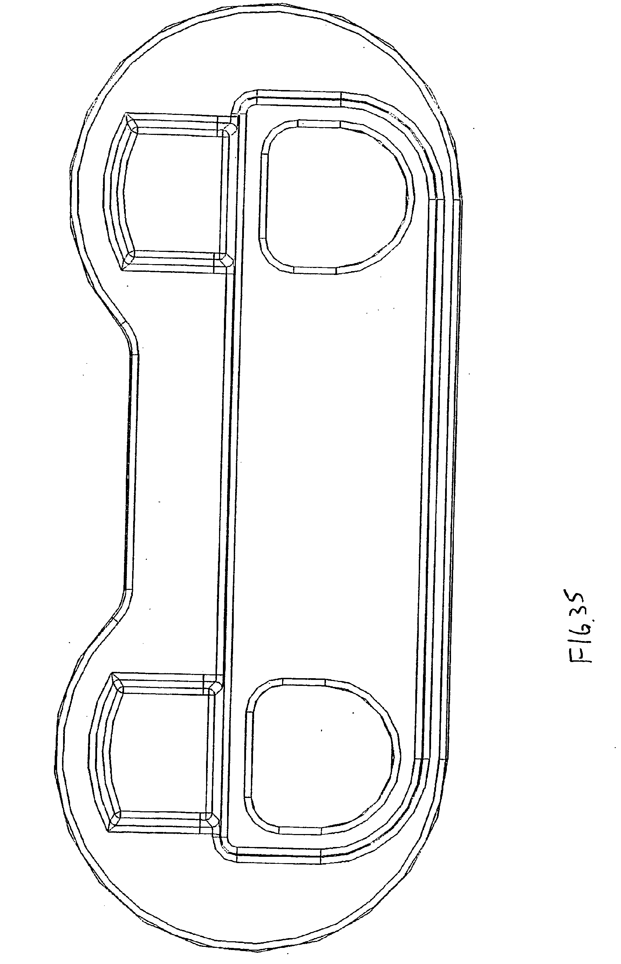

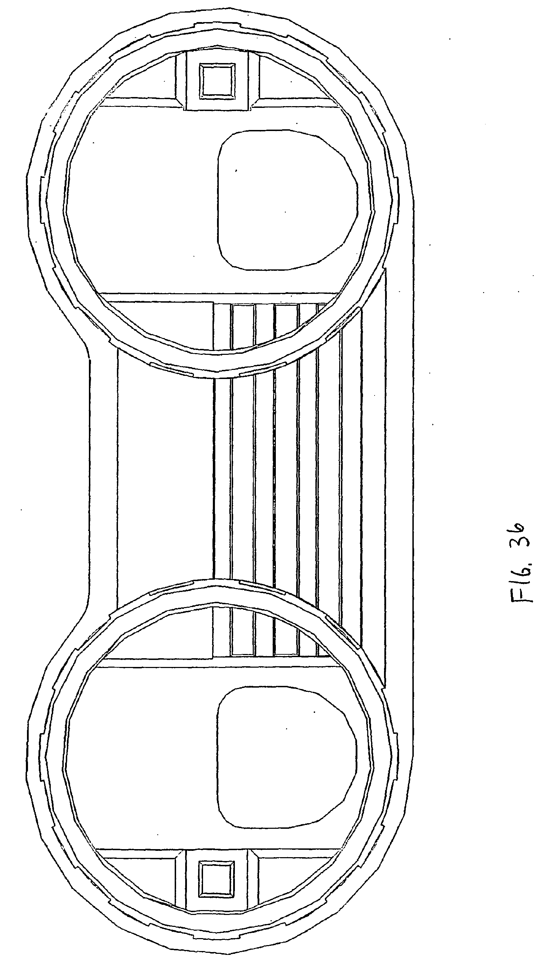

Figs. 33-36 illustrate an end cap similar to end cap 14 and 14', but for use with a round tube conveyor, not with the present invention.

The foregoing description of a preferred embodiment of the invention has been presented for purposes of illustration and description. It is not intended to be exhaustive or to limit the invention to the precise form disclosed. Obvious modifications or variations are possible in light of the above teachings. The embodiment was chosen and described in order to best illustrate the principles of the invention and its practical application to thereby enable one of ordinary skill in the art to best utilize the invention in various embodiments and with various modifications as are suited to the particular use contemplated. It is intended that the scope of the invention be defined by the claims submitted with a regular utility application based on this provisional application.

## Claims

1. An endless conveyor comprising a plurality of pairs of slats (4) defining an upper conveying surface, said slats configured to convey articles disposed on said upper conveying surface in a forward longitudinal direction, each of said pairs comprising:
(a) a leading slat (6) and a trailing slat (8), said leading slat having a trailing surface (16a), said trailing slat having a leading surface (18a), each said leading and trailing slats comprising respective upper surfaces which are generally aligned with each other and define a portion of said upper conveying surface, each said leading and trailing slats comprising respective lower surfaces, said leading and trailing slats having respective lateral lengths which are approximately equal to each other;
(b) a gap (20) defined between said trailing surface (16a) and said leading surface (18a) extending transverse to said longitudinal direction from said respective upper surfaces to said respective lower surfaces, said gap extending laterally along a substantial portion of said respective lateral lengths; and
a plurality of pusher shoes (12) for diverting articles laterally, each of said pairs of slats (4) carrying a respective one of said plurality of pusher shoes, each of said pusher shoes comprising a pusher base (48) having a portion (58) disposed within and shaped complementary to said gap (20) **characterized in that**:
(c) said gap comprising an offset portion (36a), a portion of said portion (58) of said pusher base being shaped complementarily to said offset portion.

2. The endless conveyor of claim 1, wherein said offset portion (36a) is inclined relative to said forward longitudinal direction.

3. The endless conveyor of claim 1, wherein said gap (20) includes a vertical portion (38a) which is oriented generally perpendicular to said conveying surface, said vertical portion being disposed between said respective upper surfaces and said offset portion (36a).

4. The endless conveyor of claim 1, wherein said a portion of said leading surface (18a) extends past a vertical line drawn through where said trailing surface (16a) intersects with the upper surface (32a) of said leading slat.

## Patentansprüche

1. Endlosfördermittel, das eine Vielzahl von Lattenpaaren (4) umfasst, die eine obere Förderfläche definieren, wobei die Latten angeordnet sind, um Gegenstände, die auf der oberen Förderfläche angeordnet sind, in einer vorwärtsgerichteten Längsrichtung zu befördern, wobei jedes Paar umfasst:
(a) eine führende Latte (6) und eine folgende Latte (8), wobei dei führende Latte eine folgende Fläche (16a) aufweist, wobei die folgende Latte eine führende Fläche (18a) aufweist, wobei jede der führenden und folgenden Latten jeweils obere Flächen umfasst, die im Allgemeinen aneinander ausgerichtet sind und einen Teil der oberen Förderfläche definieren, wobei jede der führenden und folgenden Latten jeweils untere Flächen umfasst, wobei die führenden und folgenden Latten jeweils seitliche Längen aufweisen, die einander ungefähr gleichen;
(b) eine Lücke (20), die zwischen der folgenden Fläche (16a) und der führenden Fläche (18a) definiert ist, die sich quer zur Längsrichtung von den jeweiligen oberen Flächen zu den jeweiligen unteren Flächen erstreckt, wobei sich die Lücke seitlich entlang eines wesentlichen Teils der jeweiligen seitlichen Längen erstreckt; und
eine Vielzahl von Ausstoßklötzen (12) zum seitlichen Ablenken von Gegenständen, wobei jedes der Lattenpaare (4) jeweils einen von der Vielzahl von Ausstoßklötzen trägt, wobei jeder der Ausstoßklötze einen Klotzboden (48) mit einem Teil (58) umfasst, der in der Lücke (20) angeordnet und entgegengesetzt zu ihr geformt ist, **dadurch gekennzeichnet, dass**:
(c) die Lücke (20) einen versetzten Teil (36a) umfasst, wobei ein Teil des Teils (58) des Klotzbodens komplementär zum versetzten Teil geformt ist.

2. Endlosfördermittel nach Anspruch 1, wobei der versetzte Teil (36a) relativ zur vorwärtsgerichteten Längsrichtung geneigt ist.

3. Endlosfördermittel nach Anspruch 1, wobei die Lücke (20) einen senkrechten Teil (38a) einschließt, der im Allgemeinen senkrecht zur Förderfläche ausgerichtet ist, wobei der senkrechte Teil zwischen den jeweiligen oberen Flächen und dem versetzten Teil (36a) angeordnet ist.

4. Endlosfördermittel nach Anspruch 1, wobei sich ein Teil der führenden Fläche (18a) an einer senkrechten Linie vorbei erstreckt, die dort hindurch gezogen wird, wo sich die folgende Fläche (16a) mit der oberen Fläche (32a) der folgenden Latte schneidet.

## Revendications

1. Transporteur continu, comprenant une pluralité de paires de lattes (4) définissant une surface supérieure de transport, lesdites lattes étant configurées pour transporter des articles disposés sur ladite surface supérieure de transport dans une direction longitudinale avant, chacune desdites paires comprenant :
(a) une latte avant (6) et une latte arrière (8), ladite latte avant ayant une surface arrière (16a), ladite latte arrière ayant une surface avant (18a), chacune desdites lattes avant et arrière comprenant des surfaces supérieures respectives qui sont généralement alignées l'une par rapport à l'autre et définissent une partie de ladite surface supérieure de transport, chacune desdites lattes avant et arrière comprenant des surfaces inférieures respectives, lesdites lattes avant et arrière ayant des longueurs latérales respectives qui sont approximativement égales l'une à l'autre ;
(b) un écartement (20) définit entre ladite surface arrière (16a) et ladite surface avant (18a) s'étendant transversalement à ladite direction longitudinale desdites surfaces supérieures respectives auxdites surfaces inférieures respectives, ledit écartement s'étendant latéralement le long d'une partie conséquente desdites longueurs latérales respectives ; et
une pluralité de sabots pousseurs (12) pour dévier latéralement des articles, chacune desdites paires de lattes (4) portant l'un respectif des sabots pousseurs de ladite pluralité de sabots pousseurs, chacun desdits sabots pousseurs comprenant une base de pousseur (48) ayant une partie (58) disposée dans ledit écartement (20) et ayant une forme complémentaire de celui-ci, **caractérisé en ce que** :
(c) ledit écartement comprend une partie décalée (36a), une portion de ladite partie (58) de ladite base de pousseur ayant une forme complémentaire de ladite partie décalée.

2. Transporteur continu selon la revendication 1, dans lequel ladite partie décalée (36a) est inclinée par rapport à ladite direction longitudinale avant.

3. Transporteur continu selon la revendication 1, dans lequel ledit écartement (20) comprend une partie verticale (38a) qui est orientée généralement perpendiculairement à ladite surface de transport, ladite partie verticale étant disposée entre lesdites surfaces supérieures respectives et ladite partie décalée (36a).

4. Transporteur continu selon la revendication 1, dans lequel une portion de ladite surface avant (18a) s'étend au-delà d'une ligne verticale passant par l'endroit où ladite surface arrière (16a) coupe la surface supérieure (32a) de ladite latte avant.
